# EUROPÄISCHE PATENTSCHRIFT

(11) **EP 0 218 993 B1**
(45) Veröffentlichungstag und Bekanntmachung des Hinweises auf die Patenterteilung: **02.02.1994**
(21) Anmeldenummer: 86113505.1
(22) Anmeldetag: 01.10.1986
(51) Int. Cl.: A23P 1/12, A21C 9/06, A21C 11/16

(54) **Kochextruder**
Cooking extruder
Cuiseur-extrudeur

(30) Priorität: 10.10.1985 DE 3536204
(43) Veröffentlichungstag der Anmeldung: 22.04.1987
(73) Patentinhaber: SCHAAF TECHNOLOGIE GMBH, D-65520 Bad Camberg (DE)
(72) Erfinder: Schaaf, Heinz, W-6277 Bad Camberg-Oberselters (DE)
(74) Vertreter: Lewald, Dietrich, Dipl.-Ing.

(56) Entgegenhaltungen:
- EP-A- 0 071 183
- EP-A- 0 173 982
- FR-A- 2 400 844
- FR-A- 2 528 876
- GB-A- 1 253 104

## Beschreibung

Die Erfindung betrifft einen Kochextruder mit einer Extruderschnecke zur Zuführung des Materials für einen aus einem Nahrungsmittel bestehenden Hüllkörper, mit einem Düsenkopf, wobei durch den Düsenkopf ein Füllrohr zur Zuführung von Füllmaterial geführt ist und das Füllrohr von einem Ringraum umgeben ist, der gegebenenfalls an eine Unterdruckquelle anschließbar ist, wobei das Material des Hüllkörpers unter einem Winkel zur Achse des Füllrohrs zuführbar ist, und wobei das in Extrusionsrichtung aus dem Düsenkopf herausragende Füllrohr lösbar innerhalb des Ringraumes angeordnet und aus dem Düsenkopf herausziehbar ist.

Solche Kochextruder wurden bereits vorgeschlagen (ältere europäische Patentanmeldung 0 173 982).
Bekannt sind in diesem Zusammenhang auch Düsenköpfe (europäische Patentanmeldung 0 071 183).

Extrudierte Nahrungsmittel, die als Gebäck oder Snacks auf den Markt gebracht werden, erfreuen sich immer größerer Beliebtheit. Insbesondere extrudierte Nahrungsmittel aus mehreren Materialien, beispielweise einem brotartigen Teig mit Käsefüllung,werden gern gegessen. Schwierigkeiten bereitet oft die Dosierung der Füllung, da diese aus Geschmacksgründen in nicht allzu großer Masse vorliegen darf.

Der Erfindung liegt die Aufgabe zugrunde, einen Kochextruder derart auszugestalten, daß mit ihm Beschichtungen von Hüllkörpern an deren Innenseite sehr leicht auszuführen sind.

Diese Aufgabe wird erfindungsgemäß dadurch gelöst, daß am Austritts Ende des Füllrohres ein Leitkegel mit zu dem Füllrohr gerichteter Spitze angeordnet ist.

Mit dieser Ausbildung ist es möglich, daß die unter Druck durch das Füllrohr geleitete Masse über den Leitkegel nur an die Innenfläche des mittels des Kochextruders extrudierten Hüllkörpers gespritzt wird. Damit ist es möglich, ein rohrartiges Gebilde zu schaffen, daß mit einer Schicht gewünschter Stärke aus Käse, Schokolade oder dgl. beschichtet ist.

Gemäß einer bevorzugten Ausführungsform ist der Leitkegel über Haltestifte mit dem Stirnende des Füllrohres verbunden.

Gemäß einer weiteren bevorzugten Ausführungsform ist der Leitkegel in das Ende des Füllrohres eingesetzt und der Mantel des Füllrohres ist im Endbereich mit einer Vielzahl von Durchgangsöffnungen oder Schlitzen ausgebildet.

In Weiterbildung der Erfindung ist in dem Füllrohr ein Füllrohr mit geringem Durchmesser angeordnet. Damit ist es möglich, verschiedene Materialien in das Innere eines Hüllkörpers einzubringen bzw. eine Beschichtung seiner Innenseite mit verschiedenen Materialien vorzunehmen.
Unter anderem ist es denkbar, ein geeignetes Material durch den Ringraum zwischen dem äußeren und dem inneren Füllrohr zu leiten und durch das innere Füllrohr ein Treibmittel, so daß nach dem Aufspritzen des Materials auf die Innenfläche des Hüllkörpers ein Aufschäumen dieses Materials erfolgt.

Ein erfindungsgemäßes Verfahren zur Herstellung einer Beschichtung der Innenfläche eines Hüllkörpers ist dadurch gekennzeichnet, daß durch das Füllrohr eine Beschichtungsmasse unter Druck zugeführt wird und daß die Beschichtungsmasse über den Leitkegel an die Innenfläche des Hüllkörpers geleitet wird.

Gemäß einer bevorzugten Ausführungsform wird neben der Beschichtungsmasse ein Treibmittel durch das Füllrohr und über den Leitkegel an die Innenfläche des Hüllkörpers geleitet und durch das Treibmittel wird die Beschichtungsmasse aufgeschäumt.

Die Vermischung der Beschichtungsmasse mit dem Treibmittel kann dabei unmittelbar vor dem Leitkegel in dem Füllrohr erfolgen.

Es ist aber auch möglich, daß das Treibmittel auf die Beschichtungsmasse nach deren Auftragen auf die Innenfläche des Hüllkörpers geleitet wird, indem beispielsweise das innere Füllrohr mit seinem Ende über das Ende des äußeren Füllrohres hervorsteht.

Als Treibmittel wird vorzugsweise CO₂ verwendet.

Ausführungsbeispiele der Erfindung werden nachstehend anhand der Zeichnung näher erläutert. Es zeigt:
- Fig. 1: einen Längsschnitt durch einen Düsenkopf,
- Fig. 2: das Ende einer abgewandelten Ausführungsform eines Füllrohres,
- Fig. 3: das Ende eines Füllrohres zum Auftragen einer auftreibbaren Beschichtung,
- Fig. 4: einen Querschnitt längs der Linie IV-IV von Fig. 3 und
- Fig. 5: eine abgewandelte Ausführungsform eines Füllrohrendes.

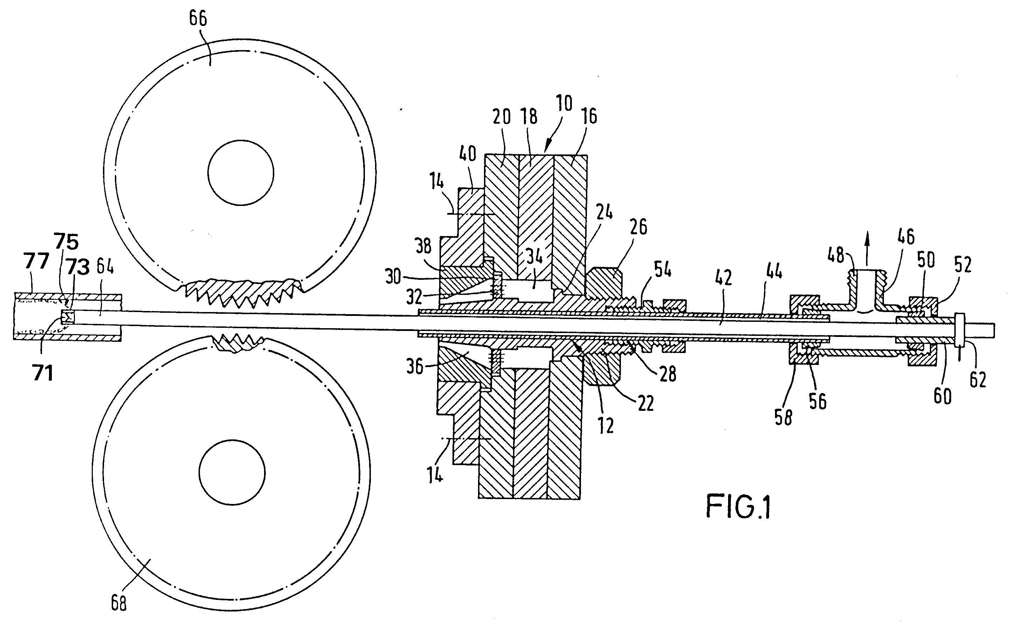

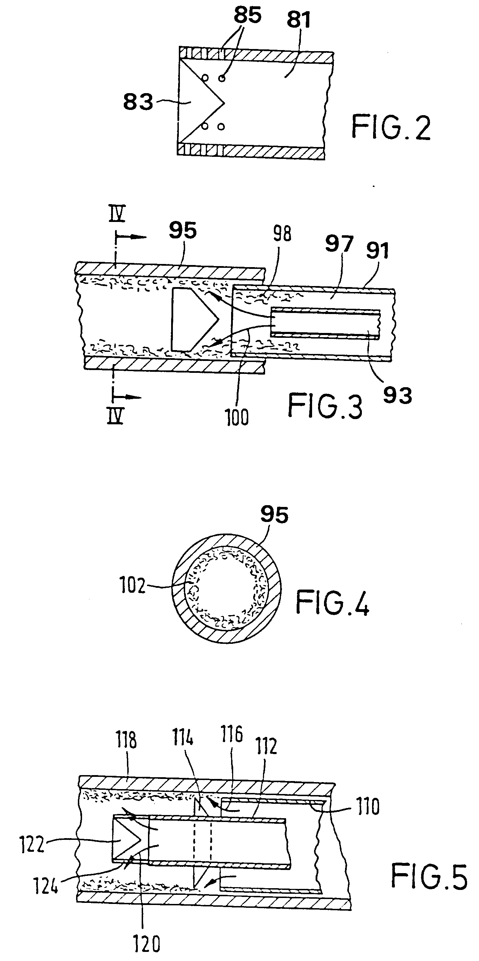

Die in Fig. 1 gezeigte Anordnung zur Herstellung eines Nahrungsmittels, bestehend aus einem Hüllkörper und gegebenenfalls einer in diesem Hüllkörper angeordneten Füllung, besteht aus einer Düsenplatte 10, in welcher in einem Bereich ein Düsenkopf 12 angeordnet ist. Die Düsenplatte 10 ist bei der gezeigten Ausführungsform aus drei über Schrauben 14 zusammengespannte Platten aufgebaut, wobei in einer hinteren Platte 16 lediglich Durchgangsbohrungen für den Düsenkopf 12 und für die Einleitung des Materialstromes für den Hüllkörper ausgebildet sind, eine mittlere Platte 18 ein Langloch aufweist, welches zur Führung des Materials für den Hüllkörper von dem Extruderende bis zu dem Düsenkopf dient, und eine vordere Platte 20, in welcher eine Durchgangsbohrung für den Düsenkopf und eine Durchgangsbohrung für eine Einstellschraube angeordnet ist, die anhand von Fig. 2 und 3 näher erläutert wird.

Der Düsenkopf 12 besteht aus einem Hohldorn oder Führungsrohr 22, welcher sich über eine angeformte Schulter 24 an der hinteren Platte 16 abstützt und über eine Mutter 26 an dieser Platte 16 festgelegt ist. In dem Hohldorn 22 ist eine rohrförmige Auskleidung 28 angeordnet, welche nach hinten über den Hohldorn 22 hinaus verlängert ist. In der vorderen Platte 20 ist eine Stauplatte 30 angeordnet, welche mit Durchgangsöffnungen 32 ausgebildet ist, durch welche das durch den Kanal 34 geführte Material für den Hüllkörper gepreßt wird. Dieses Material wird dann durch den Ringraum 36 geführt, der durch die Außenseite des Hohldorns 22 und die Innenseite eines Düseneinsatzes 38 gebildet wird. Der Düseneinsatz 38, der über eine Klemmplatte 40 an der Düsenplatte 10 befestigt ist, weist in der gezeigten Ausführungsform eine quadratische Öffnung auf. Das vordere Ende des Hohldornes 22 kann ebenfalls eine quadratische Außenkontur aufweisen, so daß ein Hüllkörper in Form eines Vierkantrohres ausgebildet wird.

Innerhalb des Hohldornes oder Führungsrohres 22 ist ein Füllrohr 42 vorgesehen, wobei zwischen der Innenseite der Auskleidung 28 und der Außenseite des Füllrohres 42 ein Ringraum 44 ausgebildet ist, welcher von einem T-förmigen Element 46 abgeschlossen ist. Dieses Element 46 ist über einen Stutzen 48 an eine Unterdruckquelle anschließbar, so daß der in dem rohrförmigen Hüllkörper während des Extrudierens gebildete Dampf abgesaugt werden kann. Dadurch wird ein Aufweichen des rohrförmigen porösen Hüllkörpers vermieden.

Das Füllrohr 42 ist durch das Element 46 hindurchgeführt, wobei über einen konischen Ring 50 und eine Mutter 52 eine Abdichtung des Elementes 46 an dem Füllrohr 42 erfolgt. Das Rohr 28 ist an dem Hohldorn 22 über eine mit einem Außengewinde versehene Muffe 54 festgelegt. Das Element 46 ist an dem Rohr 28 über einen konischen Dichtring 56 und eine Mutter 58 befestigt. Der konische Dichtring 50 liegt auf der Außenseite eines Rohrabschnittes 60 auf, durch welchen das Füllrohr 42 verschoben bzw. nach hinten aus dem Düsenkopf herausgezogen werden kann, Um ein Herausziehen aus dem Düsenkopf nach vorn zu verhindern, ist hinter dem Element 46 an dem Füllrohr 42 eine Klemme 62 vorgesehen, welche sich an dem Element bei gleichzeitigem Festhalten des Füllrohrs 42 abstützt.

Der vor den Düsenkopf ragende Bereich 64 des Füllrohres 42 ist zwischen zwei Formwalzen 66 und 68 hindurchgeführt. Die Formwalzen 66 und 68, die zur Ausbildung eines geeigneten Musters an der Außenseite des Hüllkörpers vorgesehen sind, können auch beispielsweise bis auf Rotglut aufheizbar sein, so daß an der Außenseite des Hüllkörpers eine lokale Wärmebehandlung erfolgen kann. Beispielsweise kann mit derartigen Formwalzen ein Warenzeichen in Form eines Brandzeichens aufgebracht werden. Während des Betriebs der Formwalzen dient der vordere Bereich 64 des Füllrohres 42 als Widerlager, so daß der Hüllkörper nicht unbegrenzt dem Druck der Formwalzen ausweichen kann. Wenn die Formwalzen mit sich ergänzenden Hohlkehlen ausgebildet sind, kann bei entsprechender Aufheizung ein Backen der Außenseite des Hüllkörpers erfolgen, so daß eine angebackene, knusprige Oberfläche des Hüllmaterials erreicht wird.

Vor dem Austrittsende des Füllrohres 42 ist ein Leitkegel 71 angeordnet. Der Leitkegel 71 ist dabei über Haltestifte 73 mit der Stirnfläche des Füllrohres 42 verbunden. Durch das Füllrohr wird beispielsweise ein Pulver oder eine Masse mit geeigneter Viskosität geführt. Wenn das Pulver oder diese Masse auf den Leitkegel 71 auftrifft, erfolgt eine Umlenkung, so daß das Pulver oder die Masse 75 an die Innenseite eines Hüllkörpers 77 gespritzt wird. Auf diese Weise erfolgt eine Beschichtung gewünschter Stärke an der Innenfläche des Hüllkörpers 77.

Fig. 2 zeigt ein Füllrohr 81, an dessen vorderem Ende ein Leitkegel 83 eingesetzt ist. Damit ein Pulver oder eine Masse, die durch das Füllrohr 81 geleitet werden, nach außen treten kann, ist das Füllrohr 81 mit einer Vielzahl von Durchgangsöffnungen 85 ausgebildet. Die Anzahl und Größe der Durchgangsöffnungen 85 muß dabei derart gewählt werden, daß keine Verstopfung des vorderen Endes erfolgt. Anstelle von Durchgangsöffnungen können auch Längsschlitze geeigneter Länge an dem Ende des Füllrohres 81 ausgebildet werden.

Fig. 3 zeigt ein Füllrohr 91, in welchem koaxial ein zweites Füllrohr 93 angeordnet ist. Das zweite Füllrohr 93 ist etwas kürzer als das Füllrohr 91. Mit Hilfe dieser Anordnung kann eine Beschichtung aus zwei Komponenten erfolgen, deren Vermischung vorzugsweise erst kurz vor dem Austritt aus dem Füllrohr durchgeführt werden soll. Beispielsweise ist es möglich, einen Hüllkörper 95 an der Innenseite mit einer Masse zu beschichten, welche auftreibt, so daß anstelle einer dünnen Schicht eine luftige Schicht größerer Stärke ausgebildet werden kann. Durch den von den Füllrohren 91 und 93 gebildeten Ringraum 97 kann beispielsweise eine schokoladenartige Masse geleitet werden, während durch das Füllrohr 93 ein Treibmittel wie beispielsweise CO₂ zugeführt werden kann. Wenn die Masse und das Treibmittel zu weit vor dem Austritt aus dem Füllrohr miteinander vermischt werden würden, würde wegen mechanischer Beanspruchung ein Zusammenfallen dieser aufgetriebenen Masse erfolgen, so daß die gewünschte Beschichtung nicht erreicht würde. Da die Vermischung der Beschichtungsmasse 98 mit dem Treibmittel 100 erst kurz vor dem Austritt aus dem Füllrohr erfolgt, kann die Konsistenz der Beschichtungsmasse erhalten werden.

Fig. 4 zeigt einen Querschnitt durch den Füllkörper 95. Im Inneren ist eine aufgetriebene Schicht 102 aus der Beschichtungsmasse 98 und aus dem Treibmittel 100 ausgebildet.

Fig. 5 zeigt eine abgewandelte Ausführungsform. Mit dieser Ausführungsform ist es möglich, das Treibmittel erst an die Beschichtungsmasse zuzuführen, wenn diese bereits als dünne Schicht an der Innenseite eines Hüllkörpers angeordnet ist. Dazu ist in einem Füllrohr 110 koaxial ein zweites Füllrohr 112 mit geringerem Durchmesser angeordnet. Vor dem Austrittsende des Füllrohres 110 ist ein Leitkonus 114 an der Außenseite des Füllrohres 112 befestigt. Durch den Ringraum, der zwischen der Außenseite des Füllrohres 112 und der Innenseite des Füllrohres 110 gebildet wird, wird eine Beschichtungsmasse 116 geführt, die über den Konus 114 an die Innenseite eines Hüllkörpers 118 geleitet wird. Da das Füllrohr 112 länger ist als das Füllrohr 110, gelangt durch das Füllrohr 112 geführtes Treibmittel 120 später als die Beschichtungsmasse 116 an die Innenfläche des Hüllkörpers 118. Um das Treibmittel 120 gleichmäßig an die Beschichtungsmasse 116 zu leiten, ist vor dem Austrittende des Füllrohres 112 ein Leitkegel 122 angeordnet, der über Haltestifte 124 mit dem Füllrohr 112 verbunden ist. Das Treibmittel 120 wird von dem Leitkegel 122 abgelenkt und auf die Schicht aus der Beschichtungsmasse 116 gebracht, so daß danach ein Aufschäumen der Beschichtungsmasse 116 erfolgen kann. Nach dem Aufschäumen ergibt sich ein Füllkörper 118 mit einer im Inneren aufgeschäumten Schicht aus Beschichtungsmasse 116 und Treibmittel 120 analog Fig. 4.

## Patentansprüche

1. Kochextruder mit einer Extruderschnecke zur Zuführung des Materials für einen aus einem Nahrungsmittel bestehenden Hüllkörper, mit einem Düsenkopf (12), wobei durch den Düsenkopf (12) ein Füllrohr (42) zur Zuführung von Füllmaterial geführt ist und das Füllrohr von einem Ringraum (44) umgeben ist, der gegebenenfalls an eine Unterdruckquelle anschließbar ist, wobei das Material des Hüllkörpers unter einem Winkel zur Achse des Füllrohrs (42) zuführbar ist, und wobei das in Extrusionsrichtung aus dem Düsenkopf (12) herausragende Füllrohr (42) lösbar innerhalb des Ringraumes (44) angeordnet und aus dem Düsenkopf (12) herausziehbar ist, dadurch gekennzeichnet, daß am Austrittsende des Füllrohres (42) ein Leitkegel (71) mit zu dem Füllrohr (42) gerichteter Spitze angeordnet ist.

2. Kochextruder nach Anspruch 1, dadurch **gekennzeichnet,** daß der Leitkegel (70) über Haltestifte (72) mit dem Stirnende des Füllrohres (42) verbunden ist.

3. Kochextruder nach Anspruch 1, dadurch **gekennzeichnet,** daß der Leitkegel (82) in das Ende des Füllrohres (80) eingesetzt ist und daß der Mantel des Füllrohres (80) im Endbereich mit einer Vielzahl von Durchgangsöffnungen (84) oder Schlitzen ausgebildet ist.

4. Kochextruder nach einem der Ansprüche 1 bis 3, dadurch **gekennzeichnet,** daß in dem Füllrohr (91, 110) ein Füllrohr mit geringerem Durchmesser (93, 112) angeordnet ist.

5. Verfahren zum Beschichten der Innenfläche eines Hüllkörpers mit einem Kochextruder nach einem oder mehreren der Ansprüche 1 bis 4, dadurch **gekennzeichnet,** daß durch das Füllrohr eine Beschichtungsmasse unter Druck zugeführt wird, und daß die Beschichtungsmasse über den Leitkegel an die Innenfläche des Hüllkörpers geleitet wird.

6. Verfahren nach Anspruch 5, dadurch **gekennzeichnet,** daß neben der Beschichtungsmasse ein Treibmittel durch das Füllrohr und über den Leitkegel an die Innenfläche des Hüllkörpers geleitet wird, und daß das Treibmittel die Beschichtungsmasse aufschäumt.

7. Verfahren nach Anspruch 6, dadurch **gekennzeichnet,** daß die Vermischung der Beschichtungsmasse mit dem Treibmittel vor dem Leitkegel in dem Füllrohr erfolgt.

8. Verfahren nach Anspruch 6, dadurch **gekennzeichnet,** daß das Treibmittel auf die Beschichtungsmasse nach deren Auftragen auf die Innenfläche des Hüllkörpers geleitet wird.

9. Verfahren nach einem der Ansprüche 6 bis 8, dadurch **gekennzeichnet,** daß das Treibmittel CO₂ ist.

## Claims

1. Cooking extruder having an extruder screw for feeding the material for a casing body consisting of a foodstuff, with a die head (12), a filling pipe (42) for feeding filling material being guided through the die head (12) and the filling pipe being surrounded by an annular chamber (44) which can be connected if appropriate to a source of subatmospheric pressure, the material of the casing body being feedable at an angle to the axis of the filling pipe (42) and the filling pipe (42) which projects from the die head (12) in the direction of extrusion being arranged within the annular chamber (44) such that it can be detached and pulled out of the die head (12), characterised in that a guide cone (71) with its tip directed towards the filling pipe (42) is arranged at the outlet end of the filling pipe (42).

2. Cooking extruder according to Claim 1, characterised in that the guide cone (70) is connected via retaining pins (72) to the end face of the filling pipe (42).

3. Cooking extruder according to Claim 1, characterised in that the guide cone (82) is inserted into the end of the filling pipe (80) and in that the wall of the filling pipe (80) is designed with a multiplicity of passage openings (84) or slits in its end region.

4. Cooking extruder according to one of Claims 1 to 3, characterised in that a filling pipe with smaller diameter (93, 112) is arranged in the filling pipe (91, 110).

5. Method for coating the inner surface of a casing body using a cooking extruder according to one or more of Claims 1 to 4, characterised in that a coating material is fed under pressure through the filling pipe and in that the coating material is conducted via the guide cone to the inner surface of the casing body.

6. Process according to Claim 5, characterised in that, apart from the coating material, a blowing agent is conducted through the filling pipe and via the guide cone to the inner surface of the casing body and in that the blowing agent foams the coating material.

7. Process according to Claim 6, characterised in that the mixing of the coating material with the blowing agent takes place upstream of the guide cone in the filling pipe.

8. Process according to Claim 6, characterised in that the blowing agent is conducted to the coating material after the latter has been applied to the inner surface of the casing body.

9. Process according to one of Claims 6 to 8, characterised in that the blowing agent is CO₂.

## Revendications

1. Cuiseur-extrudeur, avec une vis extrudeuse pour alimenter le matériau nécessaire pour un corps enveloppant en produit alimentaire, et avec une tête de filière (12), un tube de remplissage (42) pour alimenter du matériau de remplissage étant guidé à travers la tête de filière (12), et le tube de remplissage étant entouré d'un espace annulaire (44), qui peut éventuellement être raccordé à une source de dépression, le matériau du corps enveloppant pouvant être alimenté sous un angle par rapport à l'axe du tube de remplissage (42), et le tube de remplissage (42), qui dépasse hors de la tête de filière (12) dans la direction d'extrusion, étant disposé de manière amovible à l'intérieur de l'espace annulaire (44) et pouvant être sorti de la tête de filière (12) en le tirant, **caractérisé** en ce qu'un cône directeur (71), dont la pointe est dirigée vers le tube de remplissage (42), est disposé à l'extrémité de sortie du tube de remplissage (42).

2. Cuiseur-extrudeur selon la revendication 1, **caractérisé** en ce que le cône directeur (70) est assemblé par des axes de fixation (72) à l'extrémité frontale du tube de remplissage (42).

3. Cuiseur-extrudeur selon la revendication 1, **caractérisé** en ce que le cône directeur (82) est introduit dans l'extrémité du tube de remplissage (80) et en ce que l'enveloppe du tube de remplissage (80) est dotée, dans la région terminale, d'une pluralité d'ouvertures débouchantes (84) ou de fentes.

4. Cuiseur-extrudeur selon l'une quelconque des revendications 1 à 3, **caractérisé** en ce qu'un tube de remplissage de diamètre inférieur (93, 112) est disposé dans le tube de remplissage (91, 110).

5. Procédé pour enduire la face intérieure d'un corps enveloppant à l'aide d'un cuiseur-extrudeur selon l'une quelconque des revendications 1 à 4, **caractérisé** en ce qu'on alimente à travers le tube de remplissage une masse d'enduction sous pression, et en ce que la masse d'enduction est dirigée, par l'intermédiaire du cône directeur, sur la face intérieure du corps enveloppant.

6. Procédé selon la revendication 5, **caractérisé** en ce qu'en plus de la masse d'enduction, on dirige un agent gonflant à travers le tube de remplissage et, par l'intermédiaire du cône directeur, sur la face intérieure du corps enveloppant, et en ce que l'agent gonflant fait gonfler la masse d'enduction.

7. Procédé selon la revendication 6, **caractérisé** en ce que le mélange de la masse d'enduction avec l'agent gonflant s'effectue avant le cône directeur dans le tube de remplissage.

8. Procédé selon la revendication 6, **caractérisé** en ce que l'agent gonflant est dirigé sur la masse d'enduction après avoir appliqué cette dernière sur la face intérieure du corps enveloppant.

9. Procédé selon l'une quelconque des revendications 6 à 8, **caractérisé** en ce que l'agent gonflant est du CO₂.
